Europäisches Patentamt

European Patent Office

Office européen des brevets

(11) Veröffentlichungsnummer: **0 268 033**

**A1**

# (12) EUROPÄISCHE PATENTANMELDUNG

(21) Anmeldenummer: 87113285.8

(22) Anmeldetag: **11.09.87**

(51) Int. Cl.⁴: **A23P 1/00** , C11D 3/382

(30) Priorität: 22.10.86 DE 3635868

(43) Veröffentlichungstag der Anmeldung:
25.05.88 Patentblatt 88/21

(84) Benannte Vertragsstaaten:
AT BE CH DE ES FR GB GR IT LI LU NL SE

(71) Anmelder: Joh. A. Benckiser GmbH
Benckiserplatz 1
D-6700 Ludwigshafen/Rh. 1(DE)

(72) Erfinder: Ussat, Wolfgang, Dr.
Untere Hart 71
D-6703 Limburgerhof(DE)

(74) Vertreter: Grussdorf, Jürgen, Dr. et al
Patentanwälte Zellentin & Partner
Rubensstrasse 30
D-6700 Ludwigshafen(DE)

(54) Mittel zur Reinigung von Lebensmitteln.

(57) Die Erfindung betrifft Mittel zur Reinigung insbesondere pflanzlicher Lebensmittel in Form einer wässrigen konzentrierten Lösung, die 5 - 10 Gew% Citronensäure-Fettsäureglyceridester, 0 - 8 Gew% Stärke oder Stärkeabbauprodukt 0 - 1 Gew% Stabilisator 0,5 - 5 Gew% Lecithin, 0 - 10 Gew% niederen Polyalkohol, 0 - 10 Gew% Citrat und Wasser enthält, sowie Verfahren zur Reinigung von Lebensmitteln.

EP 0 268 033 A1

## Mittel zur Reinigung von Lebensmitteln

Die vorliegende Erfindung betrifft ein Mittel zum Reinigen von Lebensmitteln, insbesondere von pflanzlichen Lebensmitteln.

Pflanzliche Lebensmitteln sind bedingt durch Anbauart und Lagerung sowie Umweltbelastung durch Pflanzenschutzmittel, Konservierungsmittel und aus Niederschlägen und Umgebungsluft stammenden Verschmutzungen zunehmend stark belastet. Abwischen öder Abwaschen mit Leitungswasser beseitigt solche Verunreinigungen nicht oder nur bei sehr langer Einwirkung, insbesondere wenn die Oberflächen "fettig" (hydrophob) sind.

Mit üblichen Reinigungsmitteln lassen sich diese Substanzen zwar von der Oberfläche der Nahrungsmittel besser entfernen, doch sind diese nicht geschmacksneutral, bzw. nachteilig und können selbst nicht wieder vollständig entfernt werden.

Es wurden daher Reinigungsmittel vorgeschlagen, die z.B. in Trockenform einer Spülflotte zuzugeben sind, um nach Auflösen die Behandlung der Lebensmittel durchführen zu können, siehe z.B. DE-PS 27 09 750.

Diese Mittel sind durch Ihren Gehalt an Tensiden nicht geschmacksneutral und geben den behandelten Lebensmitteln einen unangenehmen Geschmack.

Die vorliegende Erfindung hat sich angesichts des Standes der Technik die Aufgabe gestellt, ein Mittel zur Reinigung von Lebensmitteln, insbesondere zur Obst-und Gemüsereinigung zur Verfügung zu stellen, das physiologisch unbedenklich aus Naturstoffen zusammen gesetzt ist, das hinsichtlich des Eigengeschmacks verbessert ist, sich leicht abwaschen läßt und das eine erhöhte Reinigungswirkung aufweist.

Die Lösung dieser Erfindung gelingt mit einem Mittel der eingangs geschilderten Art, wie es in den Ansprüchen näher gekennzeichnet ist. Insbesondere kann es folgende Zusammensetzung aufweisen:

5 - 10 Gew%      Citronensäure-Fettsäureglyceridester

0 - 8 Gew%      Stärke oder Stärkeabbauprodukt

0 - 1 Gew%      Stabilisator

0,5-1 Gew%      Lecithin

0 - 10 Gew%      niederer Polyalkohol

0 - 10 Gew%      Citrat

Rest Wasser

Das Mittel kann in vorteilhafter Weise in Form seines Konzentrats, z.B. auf die zu verzehrende Frucht direkt aufgebracht werden, ein einfaches Abwischen der Flüssigkeit zusammen mit gelösten oder kolloidal in diese eingebetteten Verschmutzungen genügt für die Reinigung von Einzelstücken.

Das Mittel kann dabei gefahrlos auf die menschliche Haut gelangen, es ist dermatologisch unbedenklich zusammengesetzt.

Anhaftende Reinigungsmittelreste können ohne weiteres mitverzehrt werden, da das Produkt einen milden fruchtsauren Geschmack aufweist und sämtliche Komponenten als Nahrungsmittel oder Nahrungsmittelzusatzstoffe zugelassen sind.

Bei weichschaligen Früchten oder Blattgemüse ist es vorzuziehen, das verschmutzte Gut in einer 0,1 - 1 %igen Lösung in Wasser ein-oder mehrfach zu waschen und ggf. mit klarem Wasser nachzuspülen, um einen Überschuß des Mittel zu entfernen.

Das erfindungsgemäße Mittel weist eine überraschend hohe Reinigungskraft auf.

Die Anwendung sowohl als Konzentrat, als auch in Form verdünnter Lösung wird durch die Einstellung die Viskosität des Konzentrats auf 50-80 cP entscheidend verbessert.

Letztlich ist anzumerken, daß sich das erfindungsgemäße Reinigungsmittel gut mit Wasser, insbesondere auch in der Anwendung als Konzentrat, von dem so gereinigten Obst oder Gemüse, abspülen läßt.

Nachfolgend sind beispielsweise Kompositionen aufgeführt. Die Angaben sind in Gewichtsteilen aufgeführt, soweit nicht etwas anderes vermerkt ist.

Beispiel 1    87,5  $H_2O$ dest

    6,0  Citronensäuremonoglyceridester

    2,0  Sojalecithin (1)

    5,0  Stärke (wasserlöslich)

    0,5  Kaliumsorbat

Beispiel 2    91,5  $H_2O$ dest

    3,0  Zitronensäureester von Mono- und Diglyceriden von Speisefettsäuren

    3,0  Zitronensäuremonoglyceridester

    2,0  Sojalecithin (1)

    0,5  Kaliumsorbat

Beispiel 3    86,7  $H_2O$ dest

    3,0  Zitronensäureester von Mono- und Diglyceriden von Speisefettsäuren

    3,0  Zitronensäuremonoglyceridester

    5,0  Stärkehydrolysat

    0,3  Kaliumsorbat

Beispiel 4    85,0  $H_2O$ dest

    10,0  Natriumcitrat

    2,0  Sojalecithin (2)

    2,0  Mono- und Diglyceridcitronensäureester von Speisefettsäuren

1,0 Kaliumsorbat

Beispiel 5    72,3 $H_2O$ dest

20,0 Kaliumcitrat

2,0 Sojalecithin (2)

5,0 Mono- und Diglycerid-Zitronensäureester von Speisefettsäuren

0,5 Kaliumsorbat

Beispiel 6    85,5 $H_2O$ dest

10,0 Natriumcitrat

2,0 Sojalecithin (2)

2,0 Zitronensäureester von Mono- und Diglyceriden von Speisefettsäuren

0,5 Kaliumsorbat

Beispiel 7    67,7 $H_2O$ dest

20,0 Natriumcitrat

2,0 Sojalecithin (2)

5,0 Zitronensäureester von Mono- und Diglyceriden von Speisefettsäuren

5,0 Stärke

0,3 Ascorbylpalmitat

Bei den vorgenannten Substanzen handelt es sich um Handelsprodukte. Der Zitronensäureester der Mono-und Diclyceride ist z.B. eine unter der Bezeichnung AXOL C 63 von der TEGO-TENSIDE vertriebenen Substanz. Als Sojalecithin (1) wurde Citomulgan der Firma Günter Gienow eingesetzt. Als Sojalecithin (2) wurde STERNPHIL-CA der Firma Stern eingesetzt.

Die gute Reinigungswirkung der erfindungsgemäßen Produkte wurde an Hand des Reinigers gemäß Beispiel 1 getestet. Dazu wurden 25 l einer 1 % wässrigen Lösung des Reingers jeweils 5 min. unter leichter Bewegung auf 1,5 kg des jeweiligen Lebensmittels zur Einwirkung gebracht.

Entsprechend wurde zum Vergleich mit 25 l Trinkwasser gewaschen.

Die Zusatzbehandlung mit den kontaminierenden Stoffen wurde 24 bis 48 Stunden vor der Ernte der Lebensmittel durch Besprühen mit einer 0,02 - 0,5 % wässrigen Lösung der Substanzen durchgeführt; die Lebensmittel unmittelbar nach der Ernte gereinigt.

Tabelle 1:  Pflanzenschutzmittel-Rückstände in Spinat in Abhängigkeit von der Waschtechnik

| Proben-Nr. | Probenbezeichnung | Gehalte mg/kg | | | | | | | | |
| | | Insekticid (Lindan) | | | Fungizid (Dichlofluanid) | | | Fungizid (Mancozeb) | | |
| | | abs. | rel. *) | rel. **) | abs. | rel. *) | rel.**) | abs. | rel. *) | rel. **) |
|---|---|---|---|---|---|---|---|---|---|---|
| 1 | unbehandelt | 0,009 | – | – | n.n. | – | – | n.n. | – | – |
| 2 | behandelt, ungewaschen | 138,0 | 100 | 500 | 3,84 | 100 | 400 | 113,0 | 100 | 919 |
| 3 | behandelt, mit Wasser gewaschen | 27,6 | 20 | 100 | 0,95 | 25 | 100 | 12,3 | 11 | 100 |
| 4 | behandelt mit Reiniger gewaschen | 11,4 | 8 | 41 | 0,11 | 3 | 12 | 4,3 | 4 | 35 |

Anmerkungen:  rel. *)  =  ungewaschen = 100

rel. **) =  mit Wasser allein gewaschen = 100

Tabelle 2: Pb- und Cu-Gehalte in Spinat in Abhängigkeit von der Waschtechnik

| Proben.Nr. | Probenbezeichnung | Gehalte mg/kg | | | | | | | |
|---|---|---|---|---|---|---|---|---|---|
| | | Blei | | | | Kupfer | | | |
| | | absolut | | | | absolut | | | |
| | | TS | FS | rel.*) | rel.**) | TS | FS | rel.*) | rel.**) |
| 1 | unbehandelt | 5,5 | 0,5 | – | – | 4,8 | 0,4 | – | – |
| 2 | behandelt, ungewaschen | 2 364 | 224,6 | 100 | 741 | 2 713 | 257,2 | 100 | 673 |
| 3 | behandelt, mit Wasser gewaschen | 409 | 30,3 | 14 | 100 | 519 | 38,2 | 15 | 100 |
| 4 | behandelt, mit Reiniger gewaschen | 79 | 5,5 | 2 | 18 | 187 | 12,9 | 5 | 34 |

Anmerkungen: TS = Trockensubstanz
FS = Frischsubstanz

rel.*) = ungewaschene Frischsubstanz = 100
rel. **)= mit Wasser allein gewaschen (Frischsubstanz) = 100

Tabelle 3: Dichlofluanid-Rückstände in Erdbeeren in Abhängigkeit von der Waschtechnik

| Proben-Nr. | Probenbezeichnung | Dichlofluanidgehalte | | |
| --- | --- | --- | --- | --- |
| | | mg/kg | relativ *) | relativ **) |
| 1 | unbehandelt | 0,11 | - | - |
| 2 | behandelt, ungewaschen | 2,97 | 100 | - |
| 3 | behandelt, mit Wasser gewaschen | 1,17 | 39 | 100 |
| 4 | behandelt, mit Reiniger gewaschen | 0,72 | 24 | 62 |

Anmerkungen: Dichlofluanidanwendung am 24.6.1986

Ernte und Waschbehandlung am 26.6.1986

Relativ *) = ungewaschen = 100

Relativ **)= mit Wasser allein = 100

**Ansprüche**

1.) Mittel zur Reinigung insbesondere pflanzlicher Lebensmittel in Form einer wässrigen konzentrierten Lösung, gekennzeichnet durch folgende Zusammensetzung:

5 - 10 Gew%      Citronsäure-Fettsäureglyceridester

0 - 8 Gew%      Stärke oder Stärkeabbauprodukt

0 - 1 Gew% Stabilisator

0,5 - 5 Gew%      Lecithin

0 - 10 Gew%      niederer Polyalkohol

0 - 10 Gew%      Citrat

Rest Wasser

2.) Mittel nach Anspruch 1, dadurch gekennzeichnet, daß es als Stärke Dextrin enthält.

3.) Mittel nach Anspruch 1 oder 2, dadurch gekennzeichnet, daß es als Stabilisator Sorbat und/oder Ascorbylpalmitat enthält.

4.) Mittel nach mindestens einem der Ansprüche 1 - 3, dadurch gekennzeichnet, daß es als niederen Alkohol Glycerin enthält.

5.) Mittel nach mindestens einem der Ansprüche 1 - 4, dadurch gekennzeichnet, daß es auf pH 5 - 7, vorzugsweise pH 6 eingestellt ist.

6.) Mittel nach mindestens einem der Ansprüche 1 - 5 in Form einer 0,1 - 1 %igen gebrauchsfertigen wässrigen Lösung.

7.) Verfahren zur Reinigung von insbesondere pflanzlichen Lebensmitteln, dadurch gekennzeichnet, daß man diese mit konzentrierten oder verdünnten Lösungen nach Anspruch 1 - 6 behandelt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| D,A | DE-B-2 709 750 (E. BOSSERT et al.)<br>* Beispiele 1-6 *<br>--- | 1 | A 23 P 1/00<br>C 11 D 3/382 |
| A | EP-A-0 012 994 (HENKEL KGAA)<br>* Ansprüche 1-7 *<br>----- | 1 | |

RECHERCHIERTE
SACHGEBIETE (Int. Cl.3)

A 23 P 1/00
C 11 D 3/00

Der vorliegende Recherchenbericht wurde für alle Patentansprüche erstellt

| Recherchenort | Abschlußdatum der Recherche | Prüfer |
|---|---|---|
| BERLIN | 14-01-1988 | SCHULTZE D |

EPO FORM 1503 03.82 (P0403)